# EUROPÄISCHE PATENTSCHRIFT

(11) **EP 1 268 363 B1**
(45) Veröffentlichungstag und Bekanntmachung des Hinweises auf die Patenterteilung: **24.01.2007**
(21) Anmeldenummer: 01921301.6
(22) Anmeldetag: 02.03.2001
(51) Int. Cl.: C04B 35/573, C04B 35/80, C04B 35/628, C04B 41/87, F16D 69/02

(54) **FASERVERSTÄRKTES STRUKTURBAUTEIL**
FIBRE-REINFORCED STRUCTURAL COMPONENT
ELEMENT STRUCTURAL RENFORCE PAR DES FIBRES

(30) Priorität: 24.03.2000 DE 10014418
(43) Veröffentlichungstag der Anmeldung: 02.01.2003
(73) Patentinhaber: Daimler Chrysler AG, 70567 Stuttgart (DE)
(72) Erfinder: BEHR, Thomas, 89275 Elchingen (DE); KURBJUHN, Manfred, 89134 Blaustein (DE); MICHAL, Robert, 88433 Schemmerhofen/Albe (DE); NIESTEGGE, Michael, 89075 Ulm (DE); WEISSKOPF, Karl-Ludwig, 73635 Rudersberg (DE)
(74) Vertreter: Brückner, Ingo Andreas
(86) Internationale Anmeldenummer: PCT/EP2001/002359
(87) Internationale Veröffentlichungsnummer: WO 2001/072661

(56) Entgegenhaltungen:
- WO-A-99/41069

## Beschreibung

Die Erfindung betrifft ein Verfahren zur Herstellung eines Strukturbauteils nach dem Oberbegriff der Ansprüche 1, 7 und 11.

Ein gattungsgemäßes Verfahren geht z. B. aus den DE 197 11 829 C1 hervor. Das hieraus bekannte Verfahren zur Herstellung eines faserverstärkten Strukturbauteils besteht aus dem Verpressen einer Mischung aus beschichteten Kohlenstoff-Faserbündeln, Füllmitteln und Bindemittel zu einem Preßkörper, aus dem Pyrolysieren dieses Preßkörpers zu einer kohlenstoffhaltigen Preform und aus dem Infiltrieren dieser Preform mit flüssigem Silizium unter Bildung einer faserverstärkten Matrix aus Silziumkarbid (SiC-Matrix), die verfahrensbedingt Reste an Silzium enthalten kann. Durch dieses Verfahren hergestellte Strukturbauteile weisen eine, für keramische Werkstoffe hohe Duktilität und eine hohe Verschleißbeständigkeit auf und sind bis zu Temperaturen von 1400° C einsetzbar. Sind derartige Strukturbauteile jedoch für längere Zeit unter oxidierenden Bedingungen solchen Temperaturen ausgesetzt, kann es zu einer Oxidation der Kohlenstoffasern an der Oberfläche kommen. Dies kann bei mechanischen Beanspruchungen der Oberfläche zum Herauslösen der Oberflächenfasern führen, was sich in einer rauheren Oberfläche äußert und die Verschleißbeständigkeit herabsetzt.

In der DE 198 05 868 A1 wird ein Verfahren beschrieben, bei dem Preßmassen mit Fasern unterschiedlicher Qualitäten in mehreren lamminaren Schichten verpreßt werden. Nach der Infiltration mit dem Silizium weist das so erhaltene Bauteil, das in Form einer Bremsscheibe ausgestaltet ist, eine duktile mittlere Schicht und zwei sprödere, jedoch oxidationsbeständigerer Außenschichten auf. Die höchste mechanische Belastung auf die Bremsscheibe wirkt jedoch am inneren Bereich des Ringes, der verfahrensbedingt ebenfalls durch duktilere und sprödere Schichten ausgebildet ist.

Aus der WO 9941069 A1 ist ein Verfahren zur Herstellung eines C/SiC-Verbundwerkstoffs bekannt, das das Verpressen einer Mischung aus C-Faserbündeln, und Bindemitteln zu einem Preßkörper, das Pyrolysieren dieses Presskörpers zu einer kohlenstoffhaltigen Preform, deren Infiltration mit flüssigem Si zur Bildung einer Si/SiC-Matri umfasst. Zur Herstellung des Grünkörpers wird die Presse nacheinander mit den verschiedenen Pressmassen gefüllt wird, wobei die innere Pressmasse aus Fasern für einen schadenstoleranter Kern und die äusserste Pressmasse aus Fasern für eine keramisierte Reibschicht besteht.

Aus der DE 3905627 A1 ist ein Verfahren zur Herstellung eines Belags für eine Bremsscheibe bekannt, wobei der Belag eine Grundplatte und eine Auflage auf der Grundplatte hat und mittels Erwärmung und Pressen von körnigem Gut geformt ist, und wobei die Auflage in Form einer Mehrzahl von Arten von Auflageabschnitten ausgebildet ist, die fest mit einer Mehrzahl von auf einer Oberfläche der Grundplatte vorgegebenen Bereichen verbunden sind. Das körnige Gut für die jeweiligen Auflageabschnitte wird in die Bereiche eingebracht, die in einem Formgestell durch Unterteilungsplatteneinrichtungen so begrenzt werden, dass sie den auf der Grundplatte vorgegebenen Bereichen entsprechen.

Der Erfindung liegt demnach die Aufgabe zugrunde, das oben genannte Verfahren dahingehend zu verbessern, daß die Oxidation der Kohlenstoffasern an der Oberfläche minimiert wird und gleichzeitig die Duktilität des Strukturbauteils im wesentlichen erhalten bleibt.

Die Lösung besteht in einem Verfahren mit den Merkmalen der Ansprüche 1, 7 oder 11.

Das erfindungsgemäße Verfahren gemäß Patentanspruch 1 zeichnet sich dadurch aus, daß zur Herstellung eines Preßkörpers bestimmte, voneinander verschiedene Mischungen aus Faserbündeln, in der Regel Kohlenstoffasern, Füllstoffe und Bindemitteln verwendet werden. Die Mischungen unterscheiden sich im wesentlichen in der Qualität der Faserbündel, deren Länge, deren Menge an einzelnen Fasern und deren Beschichtungen voneinander. Eine Mischung enthält längere Fasern mit einer Schutzschicht (Mischung A), die eine Reaktion zwischen dem Silizium und der Kohlenstoffaser weitgehend verhindert. Hierdurch kommt der Verstärkungseffekt der Faser im Bauteil in optimaler Weise zum Tragen, was zu einem duktilen Verhalten dieses Bauteilbereichs führt (duktile Bereiche). Eine weitere Mischung beinhaltet neben Füll- und Bindemitteln Fasern, die in eher geringen Maße gegen das flüssige, infiltrierende Silizium geschützt sind (Mischung B). Während der Infiltration konvertieren diese großenteils mit dem Silizium zu einer homogenen, dichten und oxidationsbeständigen, jedoch spröderen SiC-Schicht (spröde Bereiche). Durch die getrennte Lage der Mischungen in radialer und axialer Richtung in einer Preßform können somit die Werkstoffeigenschaften des resultierenden Bauteils den mechanischen und tribologischen Anforderungen des Bauteils angepaßt werden.

Während des Befüllens einer Preßform mit den Mischungen A und B werden in einer Preßform Trennvorrichtungen angebracht, durch die ein Vermischen der Mischungen A und B und/oder weiterer Mischungen verhindert wird. Die Trennvorrichtung kann in Form von Blechen oder Folien ausgestaltet sein. Die Bleche oder Folien sind so geformt, daß die Mischungen A und B in alle Raumrichtungen getrennt voneinander angeordnet werden können. Nach dem Befüllen werden die Trennvorrichtungen entfernt und die Mischungen zu dem Preßkörper verpreßt. Die getrennten Bereiche der Mischungen A und B bleiben im Preßkörper erhalten (Anspruch 2).

Um Oberflächenbereiche des Strukturbauteils besonders verschleißfest zu gestalten, werden die Mischungen in der Preßform so angeordnet, daß die Mischung B an den tribologisch belasteten Reibflächen des Bauteils liegt (Anspruch 3).

Zur Erhöhung der Duktilität der mechanisch belasteten Bauteilbereiche wird Mischung A in der Preßform so angeordnet, daß sie im Kern des Bauteils und im Innenring verteilt ist, da dort besonders duktile Werkstoffeigenschaften notwendig sind (Anspruch 4).

Der durch das Verfahren dargestellte Werkstoff ist ein Gradientenwerkstoff. Das bedeutet, es tritt keine exakte Berührungsschicht zwischen den Bauteilbereichen auf. Dies ist auf die Vermischung der Preßmassen an ihren Grenzflächen während des Pressen zurückzuführen. Besonders zur Vermeidung von Delaminationen oder Sollbruchstellen sind die fließenden Übergänge zwischen den Bereichen vorteilhaft (Anspruch 5).

Der Anteil an SiC ist in den Oberflächenbereichen eingesetzten Mischung B höher als in den Bereichen im Kern und im Innenring (Mischung A), wo die Fasern in Form von Kohlenstoff vorliegen. Aufgrund der unterschiedlichen Materialzusammensetzungen und deren unterschiedlichen Ausdehnungskoefizienten können thermische Spannungen hervorgerufen werden. Zum Abbau von möglichen thermischen Spannungen ist es zweckmäßig, in den spröden Bereichen der Oberfläche Nuten einzubringen, die etwa so tief wie die spröden Bereiche ausgeführt sind (Anspruch 6).

Eine weitere Lösung der Aufgabe besteht in dem erfindungsgemäßen Verfahren nach Patentanspruch 7. Hierbei wird das fertige Strukturbauteil, das nahezu vollständig aus einer Mischung A hergestellt wird, an den tribologisch belasteten Oberflächen mit einem Medium imprägniert, das bei einer weiteren geeigneten Behandlung eine Oxidationsschutzschicht ausbildet. Hierbei handelt es sich um ein flüssiges, imprägnierfähiges Medium, das ein Grundmaterial für die Oxidationsschutzschicht und ein Lösungsmittel enthält. Vorteilhaft für die Imprägnierbarkeit des Mediums ist ein niedriger Benetzungswinkel gegenüber der Oberfläche des Strukturbauteils und eine niedrige Viskosität. Der Vorteil dieses Verfahrens besteht darin, daß das ganze Bauteil durch duktile Bereiche dargestellt werden kann und die an der Oberfläche liegenden Faserbündel zusätzlich gegen eine Oxidation bei hohen Temperaturen geschützt werden.

Als Grundmaterial für die Oxidationsschutzschicht sind Polymere geeignet, die bei einer Temperaturbehandlung unterhalb von 200° C Verbindungen aus Silizium, Sauerstoff und Kohlenstoff erzeugen (Anspruch 8). Die Imprägnierung kann zur Erzielung von optimalen Ergebnissen mehrmals erfolgen.

Weiterhin sind zur Imprägnierung SiC-haltige Klebstoffe geeignet, die in einem Lösungsmittel gelöst sind und deren Viskosität, die das Imprägnierverhalten beeinflußt, über den Lösungsmittelgehalt eingestellt werden kann. In diesem Fall ist ebenfalls eine mehrfache Imprägnierung besonders vorteilhaft (Anspruch 9).

Die genannten Materialien zur Imprägnierung der Oberfläche imprägnieren in der Regel spontan durch die Wirkung der Kapillarkräfte. Zur Beschleunigung des Imprägniervorganges ist es zweckmäßig, diesen durch die Verwendung einer elastischen Schiene, zu unterstützen, die über die Oberfläche gezogen wird. Hierdurch wird lokal der Druck auf der Oberfläche erhöht. Besonders geeignet ist hierfür die Verwendung eines Rakels, wie es auch in der Siebdrucktechnik eingesetzt wird (Anspruch 10).

Eine weitere erfindungsgemäße Lösung der Aufgabe gemäß Patentanspruch 11 ist das Erzeugen einer, im wesentlichen aus Siliziumkarbid bestehende Schicht (SiC-Schicht) auf die Bauteiloberfläche. Hierzu wird während der Herstellung des Strukturbauteils auf den Preßkörper oder auf die poröse Preform oder auf das Strukturbauteil, bevorzugt auf die poröse Preform zumindest partiell eine Schicht aus pyrolysierbaren Material (pyrolysierbare Schicht) aufgebracht. Unter einem pyrolysierbaren Material wird ein organisches Material, wie z. B. Peche oder Phenolharze, das zu Kohlenstoff reduzierbar ist, verstanden. Ferner kann das pyrolysierbare Material in seiner Ausgangsform Kohlenstoff in allen Modifikationen und Formen (z. B. faserförmig oder pulverförmig), sowie anorganische Füllstoffe, wie z. B. SiC enthalten. Die Pyrolyse der pyrolysierbaren Schicht erfolgt entweder während einer verfahrensbedingten Temperaturbehandlung (Pyrolyse des Preßkörpers oder Infiltration der Preform) oder es wird hierfür ein zusätzlicher Prozeßschritt eingeführt. Nach der Infiltration mit Silizium sind die Bereiche der pyrolysierbaren Schicht in eine SiC-Schicht umgewandelt worden, die die darunter liegenden Kohlenstoffasern vor einer Oxidation bei hohen Temperaturen schützt und zudem besonders verschleißfest ist. Die SiC-Schicht ist fest mit der Bauteiloberfläche verbunden. Ferner kann die SiC-Schicht ein Rißmuster aus feinen Haarrissen aufweisen, was für den Abbau von möglichen Spannungen in der SiC-Schicht vorteilhaft ist.

Zur Reduzierung der Materialkosten kann die pyrolysierbare Schicht neben den genannten Bestandteilen Fräsresten, die bei der Bearbeitung der Preform anfallen und/oder SiC enthalten. Diese Mischung kann je nach Bedarf und Verfügbarkeit in unterschiedlichen Kombinationen ausgestaltet sein. Die Pyrolyse kann während des Pyrolysierens des Preßkörpers zur Preform erfolgen, wenn Verfahrensvorrichtungen, wie z. B. die Beschaffenheit des Pyrolyseofens oder des Ofens zur Infiltration das erfordern. Besonders bevorzugt wird die pyrolysierbare Schicht jedoch auf die Preform aufgebracht und während des Aufheizens zur Infiltration mit dem Silizium pyrolysiert, da so die geringsten, reaktionsbedingten Volumenänderung in der Schicht auftreten (Anspruch 12).

In einer weiteren Ausgestaltungsform umfaßt die pyrolysierbare Schicht karamellisierten Zucker, der ebenfalls bevorzugt beim Aufheizen zur Siliziuminfiltration pyrolysiert wird und im selben Prozeßschritt mit Silizium infiltriert wird. Nach der Infiltration resultiert hieraus eine dichte SiC-Schicht, die die darunterliegenden Faserbündel vor einer Oxidation schützen (Anspruch 13). Diese Variante der SiC-Schicht ist aufgrund der geringen Rohstoffkosten besonders zweckmäßig.(Anspruch 13).

Alle beschriebenen SiC-Schichten weisen eine Dicke von 0,2 bis 5 mm auf. In der Praxis hat sich herausgestellt, daß eine Schichtdicke zwischen 0,5 mm und 2,5 mm bezüglich des Oxidationsschutzes besonders günstig ist und den geringsten Verfahrenstechnischen Aufwand erfordert (Anspruch 14).

Alle bisher beschriebenen Verfahren sind besonders dann zweckmäßig, wenn das Bauteil eine Bremsscheibe ist, die beispielsweise in der Automobiltechnik und in der Bahnfahrzeugtechnik bereits Verwendung findet (Anspruch 15).

In dieser Anwendung treten an Reibflächen der Oberfläche besonders hohe Temperaturen auf, wobei gerade dort ein besonders hoher Verschleißsschutz gefordert ist (Anspruch 16).

Andererseits ist in der Kernschicht der Scheibe und besonders im inneren Bereich des Ringes eine besonders hohe Duktilität des tragenden Materials nötig. Die Erfindung bietet insbesondere für eine Bremsscheibe eine hervorragende Kombination aus besonders verschleißfesten und besonders duktilen Bereichen unter Gewährleistung aller sonstigen für dieses Bauteil geforderten Eigenschaften (Anspruch 17).

Ausführungsbeispiele der vorliegenden Erfindung werden im folgenden anhand der beigefügten Zeichnung näher erläutert.
Es zeigen:
**Fig. 1** den Querschnitt eines Preßwerkzeuges bei der Befüllung mit Preßmassen,
**Fig. 2** eine Schnittzeichnung eines Bremsscheibenreibrings, in der die auftretenden Materialbereiche dargestellt sind,
**Fig. 3,** ein Verfahrensschema entsprechend dem Beispiel 2,
**Fig. 4,** ein Verfahrensschema entsprechend dem Beispiel 4.

### Beispiel 1

Kohlenstoff-Faserbündel eines Typ A werden mit einer Beschichtung aus Phenolharz versehen. Die Kohlenstoff-Faserbündel haben eine Länge von 16 mm und eine Bündelstärke von 3000 einzelnen Fasern. Die beschichteten Faserbündel vom Typ A werden mit Graphitpulver und in Furfurylalkohol im Verhältnis 1:1 gelösten Phenolharz ca. eine Stunde in einem Sternrotormischer gemischt (Mischung A). Eine weitere Mischung aus unbeschichteten Kohlenstoff-Faserbündel eines Typs B mit einer Länge von 3 mm wird mit den selben Zusatzstoffen wie in Mischung A ebenfalls eine Stunde in einem Sternrotormischer gemischt (Mischung B).

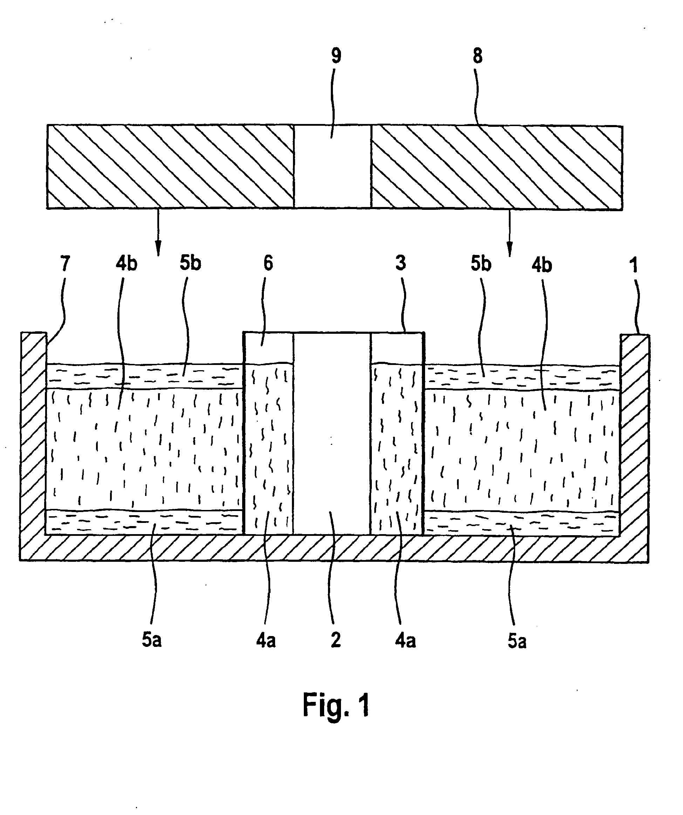

In einer zylindrischen Preßform 1 (Figur 1) mit einem zylindrischen Innendorn 2 wird ein zu einem Zylinder geformtes Blech 3 konzentrisch um den Innendorn 2 aufgestellt. Die Mischung A 4a wird in den zylindrischen Hohlraum 6, der durch den Innendorn 2 und das Blech 3 gebildet wird, auf die gewünschte Füllhöhe gefüllt. Zwischen einer äußeren Begrenzung 7 der Preßform 1 und dem zylindrischen Blech 3 wird bis zu einer Höhe von 10 mm die Mischung B 5a gefüllt. Anschließend wird hierauf auf eine Höhe von 50 mm die Mischung A 4b gefüllt, worauf wiederum die Mischung B 5b (10 mm) folgt. Das Blech 3 wird entfernt und die so angeordneten Mischungen werden durch einen Preßstempel 8, der eine Aussparung für den Innendorn 9 aufweist, bei einer Temperatur von 100° C verpreßt, wobei das Phenolharz der Mischungen A 4a, 4b und B 5a, 5b vernetzt. Durch das Pressen werden die aneinander liegenden Mischungen A 4a, 4b und B 5a, 5b an den Grenzflächen lokal leicht vermischt. Ein so erhaltener Preßkörper wird nun bei 1000° C unter Argon zu einer Preform pyrolysiert, wobei sich alle organischen Bestandteile zu Kohlenstoff reduzieren.

Die ringförmige Preform wird in einem Ofen in einem Bett aus einem Siliziumgranulat unter Ausschluß von Sauerstoff auf 1600°C erhitzt, wobei das Siliziumgranulat aufschmilzt und die Preform durch die Wirkung der Kapillarkräfte mit flüssigem Silizium infiltriert. Während der Infiltration konvertiert der Kohlenstoff der Preform mit dem Silizium zu einer SiC-Matrix. Die Fasern der Mischung A, die durch eine Kohlenstoffschicht geschützt sind, werden hierbei nicht konvertiert, weshalb diese Fasern einen Verstärkunseffekt auf die umgebende SiC-Matrix ausüben (duktiler Bereich 11).

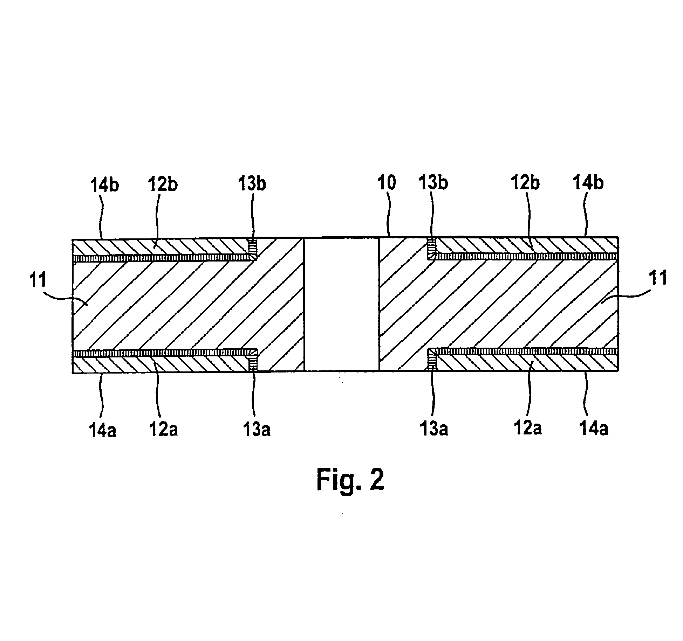

Die Fasern der Mischung B konvertieren nahezu vollständig zu SiC und bilden zusammen mit der SiC-Matrix einen dichten SiC-Bereich (oxidationsbeständiger Bereich 12a, 12b).
Es resultiert hieraus ein Bremsscheibenreibring, im folgenden Reibring 10 genannt, gemäß Figur 2.

Der Reibring 10 besteht aus duktilen Bereichen 11 im inneren konzentrisch Ring und in der inneren Schicht des Ringes, die auf die Mischung A 4a, 4b zurückzuführen sind. An den Reibflächen 14a, 14b besteht der Reibring 10 aus oxidationsbeständigen Bereichen 12a, 12b, die aus der Mischung B 5a, 5b hervorgehen. Aufgrund der lokalen Mischschicht im Preßkörper tritt zwischen den duktilen Bereichen und den oxidationsbeständigen Bereichen keine scharfe Trennung, sondern ein gradientenförmiger Übergang 13a, 13b auf.

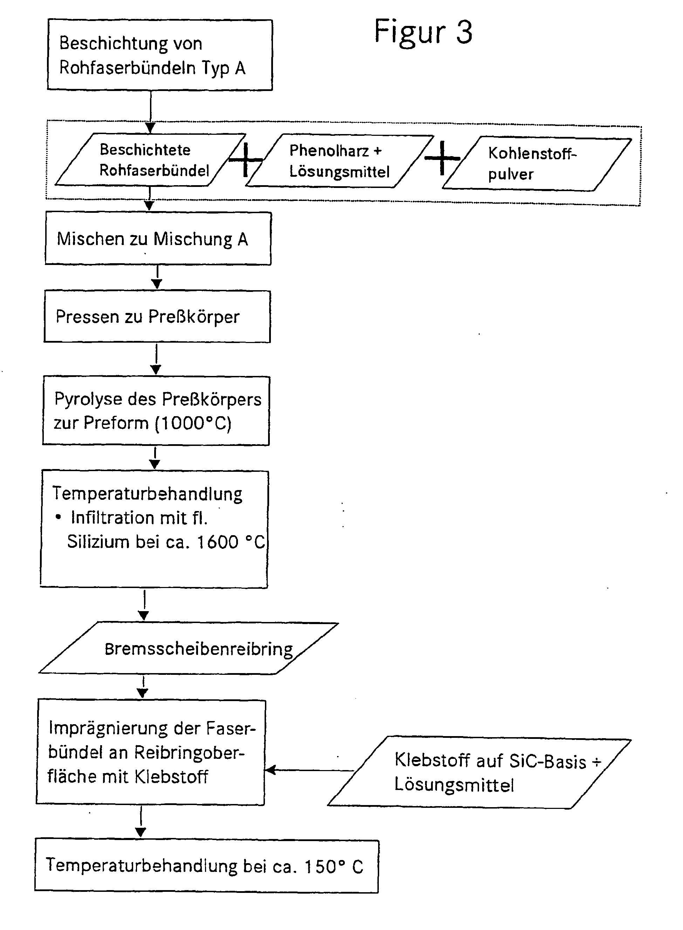

### Beispiel 2 (nach Figur 3)

Die Preßform 1 in Figur 1 wird ohne Verwendung des zylindrisch geformten Bleches 3 mit der Mischung A gefüllt und analog zu Beispiel 1 gepreßt und vernetzt. Das weitere Verfahren zur Herstellung eines Reibrings erfolgt ebenfalls analog zu Beispiel 1. Der so erhaltene Reibring besteht ausschließlich aus dem Grundmaterial der Mischung A und ist nicht identisch mit dem Reibring 10 aus Figur 2. Er weist an den Oberflächen neben der SiC-Matrix Kohlenstoffaserbündel auf. Ein in einem Lösungsmittel gelöster Klebstoff auf SiC-Basis wird auf die Oberfläche des Reibrings gebracht. Mit Hilfe eines Rakels imprägniert diese Lösung in die Kapillaren der Kohlenstoffaserbündel. Es folgt eine Temperaturbehandlung bei ca. 150° C, wobei das Lösungsmittel verdampft und der Binder eine SiC-Schutzschicht in den Faserbündeln ausbildet. Diese Imprägnierung wird zur optimalen Beschichtung ein bis zweimal wiederholt.

### Beispiel 3

Die Herstellung des Reibrings erfolgt analog Beispiel 2, es wird jedoch zur Imprägnierung ein Polymer verwendet, das bei einer Temperaturbehandlung von 100° C eine Schutzschicht auf den Fasern bildet, die aus einer Verbindung von Silizium, Kohlenstoff und Sauerstoff besteht. Die Imprägnierung wird zweimal wiederholt, hierdurch wird ein optimaler Faserschutz hergestellt.

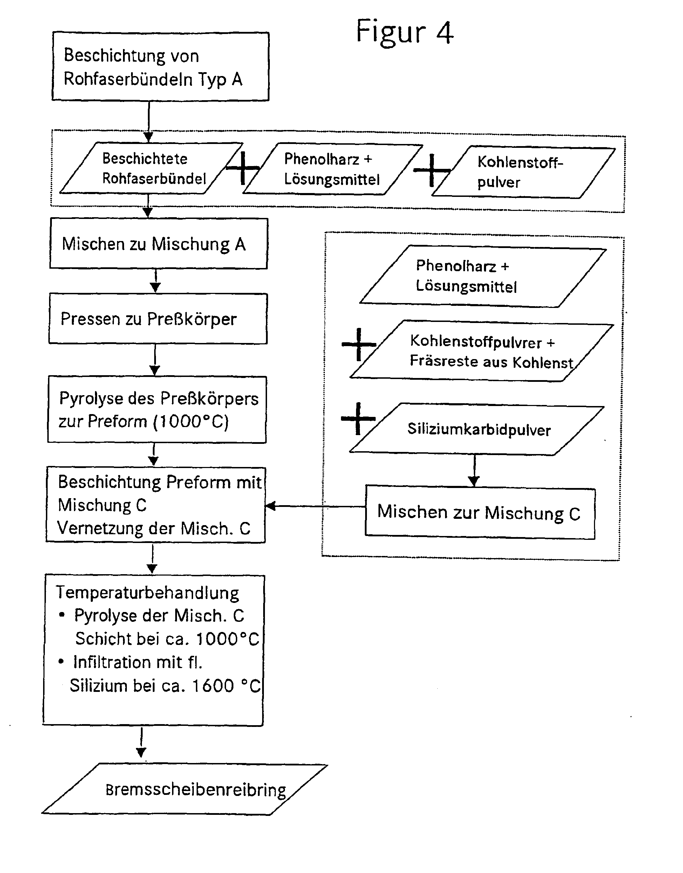

### Beispiel 4 (nach Figur 4)

Das Beispiel 4 illustriert das Verfahren gemäß Anspruch 11. Das Verfahren zur Herstellung der Preform erfolgt analog Beispiel 2. Auf die Oberfläche der pyrolysierten Preform wird eine Mischung, die aus einem Kohlenstoffpulver, aus Fräsresten, die bei der Bearbeitung der Preform entstanden sind, SiC-Pulver und einem in Furfurylalkohol gelösten Phenolharz besteht (Mischung C), aufgebracht. Die Preform mit der Schicht aus Mischung C wird zwischen zwei Metallplatten gespannt und einer Temperaturbehandlung von ca. 130° C ausgesetzt, wobei das Phenolharz vernetzt. Die so beschichtete Preform wird in einem Ofen unter Ausschluß von Sauerstoff in einem Bett aus Siliziumgranulat aufgeheizt. Bei einer Temperatur von 1000° C erfolgt die Pyrolyse der Mischung C während einer Haltezeit von 3 Stunden. Anschließend erfolgt eine weitere Aufheizung auf eine Temperatur von 1600° C, wobei das Siliziumgranulat aufschmilzt und durch die Kapillarkräfte die Preform und die pyrolysierte Schicht der Mischung C infiltriert. Hierbei erfolgt die Reaktion zwischen dem Si und dem Kohlenstoff zur SiC-Matrix, wobei die Kohlenstoffasern nicht konvertieren. Die pyrolysierte Schicht der Mischung C wird zu einer SiC-Schicht umgewandelt, die die Fasern, die unter dieser Schicht liegen, vor Oxidation schützen.

### Beispiel 5

Die Herstellung der Preform erfolgt analog zum Beispiel 4, auf die Preform wird jedoch, anstatt der Mischung C eine Schicht aus karamellisiertem Zucker und Kohlenstoff aufgebracht. Die Pyrolyse und die Infiltration erfolgt ebenfalls analog zum Beispiel 4.

## Patentansprüche

1. Verfahren zur Herstellung eines faserverstärkten, keramischen Strukturbauteils mit hochwarmfesten Fasern auf der Basis von Kohlenstoff, die mit einer Matrix aus Siliziumkarbid (SiC) reaktionsgebunden sind, umfassend folgende Schritte:
- Beschichten von Faserbündeln mit pyrolysierbaren Bindemittel und Verfestigung des Bindemittels,
- Herstellung einer Mischung aus Faserbündeln, Füllmitteln und Bindemitteln,
- Pressen der Mischung zur Herstellung eines Preßkörpers in einer Preßform,
- Pyrolyse des Preßkörpers unter Ausschluß von Sauerstoff zu einer porösen, kohlenstoffhaltigen Preform,
- Infiltration der Preform mit einer Siliziumschmelze unter Bildung der Siliziumkarbid-Matrix, wobei
- verschiedene Mischungen hergestellt werden, die Fasern unterschiedlicher Qualität und/oder in unterschiedlichen Anteilen und/oder unterschiedlichen Beschichtungen enthalten und
- diese Mischungen bei der Befüllung der Preßform in Bereichen angeordnet werden, die sich in verschiedenen Raumrichtungen der Pressform erstrecken und getrennte Lagen der Mischungen in radialer und in axialer Richtung bilden,
- die so erzeugten Bereiche nach dem Pressen und dem Vernetzen in der Preform erhalten bleiben und
- aus den Mischungen durch die Infiltration der Preform mit Silizium im Strukturbauteil Bauteilbereiche mit hoher Duktilität und Bauteilbereiche mit hoher Oxidationsbeständigkeit gebildet werden.

2. Verfahren nach Anspruch 1
**dadurch gekennzeichnet, daß**
die Preßform während des Befüllens mit den Mischungen mit Trennvorrichtungen versehen wird.

3. Verfahren nach Anspruch 1 oder 2,
**dadurch gekennzeichnet, daß**
an den Oberflächen des Strukturbauteils (12a, 12b) besonders verschleißfeste Bauteilbereiche hergestellt werden.

4. Verfahren nach einem der Ansprüche 1 bis 3,
**dadurch gekennzeichnet, daß**
in mechanisch belasteten Zonen des Strukturbauteils (11) duktile Bauteilbereiche hergestellt werden.

5. Verfahren nach einem der Ansprüche 1 bis 4,
**dadurch gekennzeichnet, daß**
die Übergänge (13a, 13b) zwischen den Bauteilbereichen (11, 12a, 12b) fließend sind.

6. Verfahren nach einem der Ansprüche 1 bis 5,
**dadurch gekennzeichnet, daß**
die Oberflächen mit Vertiefungen mit einer Tiefe von 0,1 mm bis 5 mm versehen werden.

7. Verfahren zur Herstellung eines faserverstärkten, keramisches Strukturbauteils mit hochwarmfesten Fasern auf der Basis von Kohlenstoff, die mit einer Matrix aus Siliziumkarbid reaktionsgebunden sind, umfassend folgende Schritte:
- Beschichten von Faserbündeln mit pyrolysierbaren Bindemittel und Verfestigung des Bindemittels,
- Herstellung einer Mischung aus Faserstoffbündeln, Füllmitteln und Bindemitteln,
- Pressen der Mischung zur Herstellung eines Preßkörpers,
- Pyrolyse des Preßkörpers unter Ausschluß von Sauerstoff zu einer porösen, kohlenstoffhaltigen Preform,
- Infiltration der porösen Preform mit einer Siliziumschmelze unter Bildung der Siliziumkarbid-Matrix,
- Bearbeiten des Strukturbauteils,
**dadurch gekennzeichnet, daß**
- die Oberfläche des Strukturbauteils mit einem SiC-haltigen Klebstoffimprägniert wird, der in die an der Oberfläche liegenden Faserbündel eindringt und in eine oxidationsbeständige Schutzschicht umgewandelt wird.

8. Verfahren nach Anspruch 7,
**dadurch gekennzeichnet, daß**
die Imprägnierung durch ein Polymer, das nach einer Temperaturbehandlung eine Verbindung aus Si, O und C bildet, erfolgt.

9. Verfahren nach Anspruch 7,
**dadurch gekennzeichnet, daß**
die Imprägnierung durch einen SiC-haltigen Klebstoff, erfolgt, der nach einer Temperaturbehandlung SiC bildet

10. Verfahren nach einem der Ansprüche 7 bis 9,
**dadurch gekennzeichnet, daß**
der SiC-haltige Klebstoff auf die Oberfläche des Strukturbauteils aufgebracht wird und zur Unterstützung der Kapillarwirkung mit Hilfe einer elastischen Schiene in die Oberfläche eingedrückt wird.

11. Verfahren zur Herstellung eines faserverstärkten, keramischen Strukturbauteils mit hochwarmfesten Fasern auf der Basis von Kohlenstoff, die mit einer Matrix aus Siliziumkarbid reaktionsgebunden sind, umfassend folgende Schritte:
- Beschichten von Faserbündeln mit pyrolysierbaren Bindemittel und Verfestigung des Bindemittels,
- Herstellung einer Mischung aus Faserstoffbündeln, Füllmitteln und Bindemitteln,
- Pressen der Mischung zur Herstellung eines Preßkörpers,
- Pyrolyse des Preßkörpers unter Ausschluß von Sauerstoff zu einer porösen, kohlenstoffhaltigen Preform,
- Infiltration der porösen Preform mit einer Siliziumschmelze unter Bildung der Siliziumkarbid-Matrix,
**dadurch gekennzeichnet, daß**
- auf die durch Pyrolyse erzeugte poröse Preform eine Schicht aus pyrolysierbaren Material aufgebracht wird und
- zu einer porösen kohlenstoffhaltigen Schicht pyrolysiert wird, wobei die Pyrolyse während des Aufheizens zur Siliziuminfiltration erfolgen kann und
- wobei die pyrolysierbare Schicht aus einer Mischung aus einem Kohlenstoff und/oder Fräsresten aus der Bearbeitung der Preform, sowie SiC-Pulver und einem pyrolysierbaren organischen Materials besteht und
- die Schicht im weiteren durch die Infiltration mit flüssigem Silizium in eine im wesentlichen aus Siliziumkarbid bestehende Schicht umgewandelt wird.

12. Verfahren nach Anspruch 11,
**dadurch gekennzeichnet, daß**
die SiC-Schicht eine Dicke zwischen 0,2 mm und 5 mm, insbesondere eine Dicke zwischen 0,5 mm und 2,5 mm aufweist.

13. Bremsscheibe hergestellt nach einem Verfahren der Ansprüche 1, 7 oder 11.

## Claims

1. Process for producing a fibre-reinforced, ceramic structural component comprising high-temperature resistant fibres based on carbon, which are reaction-bonded to a matrix of silicon carbide (SiC), comprising the following steps:
- coating bundles of fibres with pyrolysable binder and solidifying the binder,
- producing a mixture of fibre bundles, fillers and binders,
- pressing the mixture to produce a pressed body in a press mould,
- pyrolysing the pressed body under the exclusion of oxygen to form a porous, carbon-containing preform,
- infiltrating the preform with a silicon melt to form the silicon carbide matrix, in which process,
- various mixtures are produced, which contain fibres of different quality and/or in different amounts and/or different coatings, and
- during the filling of the press mould, these mixtures are arranged in regions which extend in different spatial directions in the press mould and form separate individual layers of the mixtures in the radial and axial directions,
- the regions produced in this way are retained in the preform after the pressing and crosslinking, and
- as a result of the infiltration of the preform with silicon, component regions of high ductility and component regions of high resistance to oxidation are formed from the mixtures in the structural component.

2. Process according to Claim 1, **characterized in that** the press mould is provided with separating means during the filling with the mixtures.

3. Process according to Claim 1 or 2, **characterized in that** particularly wear-resistant component regions are produced at the surface of the structural component (12a, 12b).

4. Process according to one of Claims 1 to 3, **characterized in that** ductile component regions are produced in mechanically loaded zones of the structural component (11).

5. Process according to one of Claims 1 to 4, **characterized in that** the transitions (13a, 13b) between the component regions (11, 12a, 12b) are gradual.

6. Process according to one of Claims 1 to 5, **characterized in that** the surfaces are provided with recesses with a depth of from 0.1 mm to 5 mm.

7. Process for producing a fibre-reinforced, ceramic structural component comprising high-temperature resistant fibres based on carbon, which are reaction-bonded to a matrix of silicon carbide, comprising the following steps:
- coating bundles of fibres with pyrolysable binder and solidifying the binder,
- producing a mixture of fibre bundles, fillers and binders,
- pressing the mixture to produce a pressed body,
- pyrolysing the pressed body under the exclusion of oxygen to form a porous, carbon-containing preform,
- infiltrating the porous preform with a silicon melt to form the silicon carbide matrix,
- machining the structural component,
**characterized in that**
the surface of the structural component is impregnated with an SiC-containing adhesive which penetrates into the fibre bundles lying at the surface and is converted into an oxidation-resistant protective layer.

8. Process according to Claim 7, **characterized in that** the impregnation takes place by means of a polymer which, after a heat treatment, forms a compound comprising Si, O and C.

9. Process according to Claim 7, **characterized in that** the impregnation takes place by means of an SiC-containing adhesive which, after a heat treatment, forms SiC.

10. Process according to one of Claims 7 to 9, **characterized in that** the SiC-containing adhesive is applied to the surface of the structural component and, to assist the capillary action, is pressed into the surface with the aid of an elastic bar.

11. Process for producing a fibre-reinforced, ceramic structural component comprising high-temperature resistant fibres based on carbon, which are reaction-bonded to a matrix of silicon carbide, comprising the following steps:
- coating bundles of fibres with pyrolysable binder and solidifying the binder,
- producing a mixture of fibre bundles, fillers and binders,
- pressing the mixture to produce a pressed body,
- pyrolysing the pressed body under the exclusion of oxygen to form a porous, carbon-containing preform,
- infiltrating the porous preform with a silicon melt to form the silicon carbide matrix,
**characterized in that**
- a layer of pyrolysable material is applied to the porous preform produced by pyrolysis, and
- is pyrolysed to form a porous carbon-containing layer,
- the pyrolysable layer comprising a mixture of a carbon and/or milling residues from the machining of the preform and SiC powder and a pyrolysable organic material, and
- the layer is then converted, by infiltration with liquid silicon, into a layer which substantially comprises silicon carbide.

12. Process according to Claim 11, **characterized in that** the SiC layer has a thickness of between 0.2 mm and 5 mm, in particular a thickness of between 0.5 mm and 2.5 mm.

13. Brake disc produced using a process according to one of Claims 1, 7 or 11.

## Revendications

1. Procédé en vue de la fabrication d'une pièce de structure en céramique, renforcée à l'aide de fibres, ayant des fibres réfractaires à base de carbone, qui sont liées par réaction à une matrice en carbure de silicium (SiC), comprenant les étapes suivantes:
- revêtement du faisceau de fibres à l'aide de liant pyrolysable et solidification du liant,
- fabrication d'un mélange fait de faisceaux de fibres, de charges et de liants,
- compression du mélange en vue de la fabrication d'un corps comprimé dans un moule de compression,
- pyrolyse du corps comprimé sous exclusion d'oxygène pour former une ébauche poreuse, contenant du carbone,
- infiltration de l'ébauche poreuse à l'aide d'une masse à l'état fondu de silicium avec formation d'une matrice de carbure de silicium,
- divers mélanges étant fabriqués, lesquels mélanges contiennent des fibres de qualité différente et/ou dans des proportions différentes et/ou contiennent des revêtements différents et
- ces mélanges étant disposés, lors du remplissage du moule de compression, dans des domaines, qui se prolongent dans différentes directions spatiales du moule de compression et qui forment des couches différentes des mélanges en directions radiale et axiale,
- les domaines ainsi produits subsistant après la compression et la réticulation dans l'ébauche et
- des domaines de pièce ayant une ductilité plus élevée et des domaines de pièce ayant une résistance à l'oxydation plus élevée étant formés à partir des mélanges par l'infiltration de l'ébauche à l'aide de silicium dans la pièce de structure.

2. Procédé selon la revendication 1, **caractérisé en ce que** le moule de compression est pourvu de dispositifs de séparation lors du remplissage à l'aide des mélanges.

3. Procédé selon la revendication 1 ou 2, **caractérisé en ce que** l'on fabrique, sur les surfaces de la pièce de structure (12a, 12b), des domaines de pièce particulièrement résistants à l'usure.

4. Procédé selon l'une quelconque des revendications 1 à 3, **caractérisé en ce que** dans les zones, sollicitées du point de vue mécanique, de la pièce de structure (11), on fabrique des domaines de pièce ductiles.

5. Procédé selon l'une quelconque des revendications 1 à 4, **caractérisé en ce que** les transitions (13a, 13b) entre les domaines de pièces (11, 12a, 12b) sont progressives.

6. Procédé selon l'une quelconque des revendications 1 à 5, **caractérisé en ce que** les surfaces sont pourvues d'évidements d'une profondeur de 0,1 à 5 mm.

7. Procédé en vue de la fabrication d'une pièce de structure en céramique, renforcée à l'aide de fibres, ayant des fibres réfractaires à base de carbone, qui sont liées par réaction avec une matrice en carbure de silicium, comprenant les étapes suivantes:
- revêtement du faisceau de fibres à l'aide de liant pyrolysable et solidification du liant,
- fabrication d'un mélange fait de faisceaux de fibres, de charges et de liants,
- compression du mélange en vue de la fabrication d'un corps comprimé,
- pyrolyse du corps comprimé sous exclusion d'oxygène pour former une ébauche poreuse, contenant du carbone,
- infiltration de l'ébauche poreuse à l'aide d'une masse à l'état fondu de silicium avec formation d'une matrice de carbure de silicium,
- traitement de la pièce de structure,
**caractérisé en ce que** la surface de la pièce de structure est imprégnée à l'aide d'un adhésif contenant du SiC, qui pénètre dans le faisceau de fibres situé à la surface et qui est converti en une couche de protection résistante à l'oxydation.

8. Procédé selon la revendication 7, **caractérisé en ce que** l'imprégnation se fait à l'aide d'un polymère, qui forme, après un traitement thermique, une liaison en Si, O et C.

9. Procédé selon la revendication 7, **caractérisé en ce que** l'imprégnation se fait à l'aide d'un adhésif contenant du SiC, qui forme du SiC après un traitement thermique.

10. Procédé selon l'une quelconque des revendications 7 à 9, **caractérisé en ce que** l'adhésif contenant du SiC est appliqué sur la surface de la pièce de structure et est pressé dans la surface à l'aide d'un rail élastique en vue du renforcement de l'action capillaire.

11. Procédé en vue de la fabrication d'une pièce de structure en céramique, renforcée à l'aide de fibres, ayant des fibres réfractaires à base de carbone, qui sont liées par réaction avec une matrice en carbure de silicium, comprenant les étapes suivantes:
- revêtement du faisceau de fibres à l'aide de liant pyrolysable et solidification du liant,
- fabrication d'un mélange fait de faisceaux de fibres, de charges et de liants,
- compression du mélange en vue de la fabrication d'un corps comprimé,
- pyrolyse du corps comprimé sous exclusion d'oxygène pour former une ébauche poreuse, contenant du carbone,
- infiltration de l'ébauche poreuse à l'aide d'une masse à l'état fondu de silicium avec formation d'une matrice de carbure de silicium,
**caractérisé**
- en ce l'on applique, sur l'ébauche poreuse produite par pyrolyse, une couche en matériau pyrolysable et
- en ce que l'on pyrolyse celle-ci pour former une couche poreuse contenant du carbone, la pyrolyse pouvant se faire lors de l'échauffement en vue de l'infiltration du silicium et
- la couche pyrolysable se composant d'un mélange de résidus de carbone et/ou de résidus de fraisage provenant de l'usinage de l'ébauche, ainsi que de poudre de SiC et d'un matériau organique pyrolysable et
- la couche étant convertie en outre par l'infiltration à l'aide du silicium liquide en une couche se composant pour l'essentiel de carbure de silicium.

12. Procédé selon la revendication 11, **caractérisé en ce que** la couche de SiC présente une épaisseur comprise entre 0,2 mm et 5 mm, en particulier, une épaisseur comprise entre 0,5 mm et 2,5 mm.

13. Disque de frein selon un procédé des revendications 1, 7 ou 11.
